# FASCICULE DE BREVET EUROPEEN

(11) **EP 2 516 836 B1**
(45) Date de publication et mention de la délivrance du brevet: **01.02.2017**
(21) Numéro de dépôt: 10798333.0
(22) Date de dépôt: 22.12.2010
(51) Int. Cl.: F02B 29/04, F02B 37/00, F02D 11/00, F02D 21/08, F02D 41/00, F02D 11/10, F16K 11/14, F02D 9/02

(54) **PROCEDE DE COMMANDE D'UN CIRCUIT EGR D'UN MOTEUR DE VEHICULE AUTOMOBILE ET VANNE POUR LA MISE EN OEUVRE**
VERFAHREN ZUR STEUERUNG EINES AGR-SCHALTKREISES BEI EINEM MOTORFAHRZEUG, VENTIL ZUR UMSETZUNG DIESES VERFAHRENS UND MOTOR MIT DIESEM VENTIL
METHOD FOR CONTROLLING AN EGR CIRCUIT OF A MOTOR VEHICLE ENGINE, VALVE FOR IMPLEMENTING SAID METHOD, AND ENGINE HAVING SAID VALVE

(30) Priorité: 22.12.2009 FR 0906247
(43) Date de publication de la demande: 31.10.2012
(73) Titulaire: Valeo Systèmes de Contrôle Moteur, 95800 Cergy (FR)
(72) Inventeur: VITIELLO, Nicolas, 92150 Suresnes (FR); POTTEAU, Sébastien, F-51360 Beaumont surVesle (FR); ADENOT, Sébastien, F-95300 Pontoise (FR); HODEBOURG, Grégory, F-78500 Sartrouville (FR)
(74) Mandataire: Cardon, Nicolas
(86) Numéro de dépôt international: PCT/EP2010/070559
(87) Numéro de publication internationale: WO 2011/076876

(56) Documents cités:
- EP-A2- 0 992 668
- EP-A2- 1 136 688
- FR-A1- 2 900 455
- FR-A1- 2 926 114
- FR-A1- 2 926 126
- JP-A- H1 162 720
- JP-A- 53 044 729
- JP-A- 2008 101 579
- US-A- 4 027 636
- US-A1- 2003 188 727

## Description

L'invention concerne un procédé de commande d'un circuit de recirculation des gaz d'échappement d'un moteur thermique à combustion interne de véhicule automobile, une vanne trois voies pour la mise en oeuvre du procédé et un moteur comportant une telle vanne.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou pas, selon que le moteur comporte un compresseur ou non; lorsqu'il est comprimé, on parle d'air de suralimentation. L'air (souvent désigné "air frais") peut par ailleurs être mélangé à des gaz d'échappement; on parle de gaz d'échappement recirculés, ce mode de fonctionnement étant typiquement désigné par l'homme du métier par l'acronyme EGR, qui signifie "Exhaust Gas Recirculation" en anglais. Les gaz admis dans la chambre de combustion sont dénommés gaz d'admission ; les gaz d'admission peuvent donc être composés d'air frais seul, ou d'un mélange d'air frais et de gaz d'échappement; le débit des gaz d'admission peut être régulé par une vanne de type papillon commandée en fonction de l'enfoncement de la pédale d'accélérateur du véhicule pour réguler le régime moteur.

Dans le cas d'un moteur avec des moyens de compression tels qu'un compresseur ou un turbocompresseur, l'air est admis dans le circuit d'admission du moteur, comprimé par le compresseur, refroidi et admis dans les cylindres où il est brûlé avec le carburant puis évacué par les canalisations d'échappement. Les gaz d'échappement entraînent une turbine, solidaire du compresseur et formant avec lui le turbocompresseur. La recirculation des gaz d'échappement peut être dite "basse pression", lorsqu'elle est faite sur des gaz d'échappement prélevés après la turbine et réintroduits avant le compresseur, ou "haute pression", lorsqu'elle est faite avec des gaz prélevés avant la turbine et réintroduits après le compresseur ; les deux types de recirculation peuvent être combinés. A titre d'exemple, la recirculation basse pression permet, pour un moteur à essence, de réduire la température d'échappement (et donc la consommation de carburant puisqu'il n'est dès lors pas nécessaire de trop enrichir le mélange de combustion) et d'éviter les phénomènes de cliquetis à fort taux de compression du moteur ; pour un moteur diesel, elle permet de diminuer la pollution pour être en accord avec les normes environnementales.

Dans le cas d'une boucle de recirculation des gaz d'échappement basse pression par exemple, une vanne dite "trois voies" est généralement prévue pour le contrôle du taux d'EGR c'est-à-dire de la proportion de gaz d'échappement recirculés dans le débit total de gaz d'admission entrant dans le moteur. Une telle vanne trois voies comporte deux conduits d'entrée, l'un pour l'air frais et l'autre pour les gaz d'échappement recirculés (pour parlera parfois dans la suite, concernant les gaz d'échappement recirculés, de "gaz EGR") ; les gaz EGR sont généralement refroidis avant leur mélange à l'air frais. La vanne trois voies comporte par ailleurs un conduit de sortie communiquant avec les conduits d'entrée pour recevoir l'air frais et/ou les gaz EGR ; ce conduit de sortie débouche par exemple dans le compresseur à partir duquel les gaz sont guidés dans un refroidisseur (ou dans une voie de dérivation de ce refroidisseur) avant leur admission dans le moteur. Bien sûr, la vanne trois voies peut être remplacée par deux vannes simples disposées, l'une dans le conduit d'admission d'air frais, l'autre dans le conduit de recirculation des gaz d'échappement. Le débit de gaz qui traverse une vanne est régulé par un moyen d'obturation tel qu'un volet ou un papillon.

Quel que soit le type de vanne choisi, la régulation du taux d'EGR est faite par la commande des vannes. Pour une bonne régulation du taux d'EGR, il convient d'asservir le système de commande des vannes à différents paramètres mesurés en temps réel dans le dispositif ; en particulier, les vannes peuvent être commandées à partir d'une mesure du débit des gaz les traversant ou encore de la différence de pression à leurs bornes.

Dans un moteur de type diesel, un débitmètre d'air est monté dans le circuit d'admission d'air et on connaît par ailleurs le débit de gaz admis dans le moteur ; la différence entre le débit de gaz d'admission et le débit d'air frais correspond au débit de gaz d'EGR et il est donc aisé d'en déduire le taux d'EGR.

Dans un moteur de type essence en revanche, il est plus compliqué d'avoir accès au taux d'EGR puisque ce type de moteur n'est généralement pas équipé d'un débitmètre d'air. Pour accéder au taux d'EGR, on peut utiliser une mesure de la différence de pression entre l'amont et l'aval de la vanne du conduit de gaz EGR ; la connaissance de cette différence de pression (en combinaison avec d'autres paramètres tels que la température des gaz ou le débit de gaz d'admission) permet d'accéder au taux d'EGR.

Toutefois, si l'on souhaite éviter l'utilisation de capteurs de pression trop précis c'est-à-dire trop onéreux pour la mesure de cette différence de pression, celle-ci doit être suffisamment élevée pour pouvoir être mesurée par des capteurs de sensibilité moyenne, typiquement comprise entre 15 et 200 millibars.

JP H11 62720 A divulgue un moteur à allumage commandé avec une ligne de recirculation, les débits d'air et d'EGR sont pilotés par trois vannes.

L'invention vise à proposer un procédé de commande d'un circuit de recirculation des gaz d'échappement qui permette un contrôle aisé du taux d'EGR.

C'est ainsi que l'invention concerne un procédé de commande d'un circuit de recirculation des gaz d'échappement d'un moteur à combustion interne de véhicule automobile selon la revendication indépendante 1.

L'invention est remarquable en ce qu'elle propose un changement particulièrement avantageux de la commande d'une boucle de recirculation des gaz d'échappement. L'art antérieur proposait traditionnellement l'ouverture progressive de la vanne EGR puis la fermeture de la vanne d'air pour créer une dépression et augmenter le débit d'EGR ; dans de tels modes opératoires, la différence de pression aux bornes de la vanne EGR était faible. A l'inverse, le procédé de l'invention propose une ouverture concomitante des vannes pour créer et conserver une différence de pression suffisante aux bornes de la vanne EGR. L'invention est particulièrement avantageuse pour la commande de la recirculation de gaz d'échappement basse pression d'un moteur à essence, pour les raisons développées ci-dessus.

Selon une forme de réalisation, les première et seconde vannes sont agencées dans une vanne trois voies comportant une voie d'entrée avec la première vanne, une voie d'entrée avec la seconde vanne et une voie de sortie communiquant directement ou indirectement avec un collecteur d'admission de gaz dans le moteur. Une telle mise en oeuvre est compacte et facile à piloter.

Selon l'invention, le circuit d'admission comportant, en aval du circuit de recirculation, une troisième vanne de régulation du débit des gaz admis dans le moteur, on agit sur ladite vanne pour compenser la fermeture de la première vanne. Cette troisième vanne peut traditionnellement être une vanne de type papillon permettant de réguler le régime moteur.

Selon une forme de réalisation, le degré d'ouverture de la première vanne est sensiblement identique au degré d'ouverture de la seconde vanne quel que soit leur degré d'ouverture. En particulier, un tel fonctionnement peut être obtenu par entraînement concomitant des vannes par un moteur unique, le degré d'ouverture des vannes dépendant linéairement la position angulaire de l'arbre d'entraînement du moteur, quelle que soit cette position.

Selon une autre forme de réalisation, le procédé comporte trois phases ou modes de fonctionnement pour l'ouverture concomitante des vannes :
- une première phase dans laquelle le degré d'ouverture de la première vanne est sensiblement identique au degré d'ouverture de la seconde vanne ;
- une deuxième phase dans laquelle le degré d'ouverture de la première vanne est supérieur au degré d'ouverture de la seconde vanne et
- une troisième phase dans laquelle le degré d'ouverture de la première vanne est constant et maximal pour une pluralité de degrés possibles d'ouverture de la seconde vanne.

L'invention concerne encore, à titre de produit intermédiaire, un circuit d'admission d'air selon la revendication indépendante 5.

Selon l'invention, la vanne présente trois modes de fonctionnement :
- un premier mode de fonctionnement dans lequel le moteur entraîne l'ouverture ou la fermeture du premier volet, le second volet étant immobile et fermé ;
- un deuxième mode de fonctionnement dans lequel les deux volets sont fermés et
- un troisième mode de fonctionnement dans lequel le moteur entraîne l'ouverture ou la fermeture concomitante des deux volets.

Selon une forme de réalisation dans ce cas, l'ouverture ou la fermeture concomitante des deux volets de la vanne trois voies présente trois phases ou modes :
- une première phase (ou mode) dans laquelle la rotation du moteur entraîne l'ouverture ou la fermeture des volets à des degrés d'ouverture sensiblement identiques ;
- une deuxième phase (ou mode) dans laquelle la rotation du moteur entraîne l'ouverture ou la fermeture des volets avec un degré d'ouverture du premier volet supérieur au degré d'ouverture du second volet et
- une troisième phase (ou mode) dans laquelle la rotation du moteur entraîne l'ouverture ou la fermeture du second volet, le premier volet étant immobile et ouverte au maximum.

L'invention concerne encore un moteur thermique à combustion interne de véhicule automobile comportant un circuit d'admission d'air tel que présenté ci-dessus.

L'invention sera mieux comprise à l'aide de la description suivante de la forme de réalisation préférée du procédé de commande, de la vanne et du moteur de l'invention, en référence aux planches de dessins annexées, sur lesquelles :
- la figure 1 est une représentation schématique d'un moteur et de ses circuits d'admission, d'échappement et de recirculation ;
- les figures 2a, 2b et 2c représentent trois modes d'utilisation de la vanne EGR de la figure 1 ;
- la figure 3 est une représentation graphique de la position des volets de la vanne EGR en fonction de la position angulaire de leur moteur d'entraînement conformément à une première forme de réalisation de la vanne de l'invention ;
- la figure 4 est une représentation graphique de la section de passage pour les gaz au niveau des volets de la vanne EGR en fonction de la position angulaire de leur moteur d'entraînement conformément à une deuxième forme de réalisation de la vanne de l'invention ;
- la figure 5 est un graphique représentant le taux d'EGR admissible en fonction du débit de gaz d'admission c'est-à-dire du régime moteur ;
- les figures 6a, 6b, 6c et 6d sont des représentations en perspective de la vanne EGR de la première forme de réalisation de l'invention.

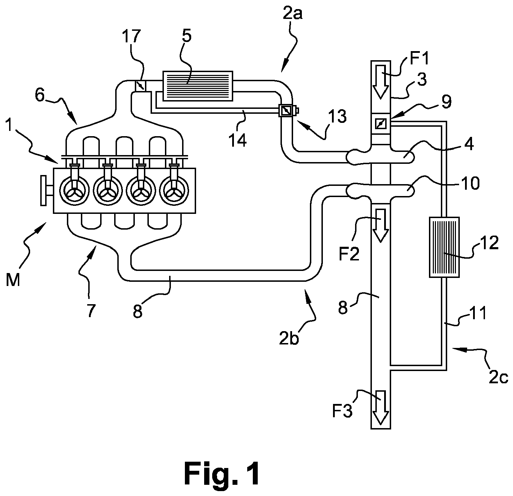

En référence à la figure 1, un moteur thermique M à combustion interne de véhicule automobile comporte une chambre de combustion 1 comportant une pluralité de cylindres, en l'espèce au nombre de quatre, et destinée à recevoir un mélange de comburant et de carburant (ici de l'essence) dont la combustion dans les cylindres génère le travail du moteur M. Le fonctionnement du moteur M est classique : les gaz sont admis dans la chambre de combustion 1, y sont comprimés, brûlés puis expulsés sous forme de gaz d'échappement; il s'agit des quatre temps classiques d'un moteur thermique (admission, compression, combustion, échappement).

Le circuit 2a d'admission de gaz dans le moteur M comporte une canalisation 3 d'admission d'air d'alimentation ou air frais (dont le flux est représenté par la flèche F1), un compresseur 4 des gaz d'alimentation, qui est en l'espèce un turbocompresseur, et un échangeur de chaleur 5, de refroidissement des gaz issus du compresseur 4. Cet échangeur de chaleur 5 est communément désigné par l'homme du métier par son acronyme "RAS", qui signifie "refroidisseur d'air de suralimentation"; sa fonction est en effet de refroidir les gaz d'admission et en particulier l'air, dont on dit qu'il est suralimenté puisqu'il est comprimé. En sortie du RAS 5, les gaz débouchent dans un collecteur 6 d'admission des gaz dans la chambre de combustion 1 du moteur M, le collecteur 6 formant une boîte d'entrée des gaz dans la culasse du moteur M. En l'espèce, le circuit d'admission 2a comporte une dérivation 14 de la voie contenant le RAS 5, la régulation des gaz entre la voie refroidie et la voie non refroidie 14 étant faite par une vanne 13, de manière connue en soi. En amont du collecteur 6 d'admission des gaz dans le moteur M, le circuit d'admission comporte une vanne 17 comportant un obturateur de type papillon dont la fonction est de régler le débit de gaz pour la régulation du régime moteur ; cette vanne-papillon 17 est commandé par une unité de contrôle du moteur (typiquement désignée par l'acronyme ECU qui signifie Engine Control Unit en anglais), bien connue de l'homme du métier.

Le circuit 2b d'échappement de gaz comporte, en sortie de la chambre de combustion 1 du moteur M, un collecteur 7 des gaz d'échappement relié à une voie ou canalisation 8 d'échappement des gaz. Le circuit d'échappement 2b comporte par ailleurs une turbine 10, solidaire en rotation du compresseur 4 des gaz d'admission et formant avec lui un turbocompresseur. La turbine 10 est entraînée par les gaz d'échappement de la voie d'échappement 8, dont le flux est schématisé par la flèche F2.

Enfin, le circuit d'échappement 2b est connecté à un circuit 2c de recirculation des gaz d'échappement comportant une canalisation 11 de guidage des gaz d'échappement recirculés ("gaz EGR") pour prélever des gaz d'échappement dans le circuit d'échappement 2b, à proximité de sa sortie, et les réintroduire dans le circuit d'admission 2a, en l'espèce en amont du compresseur 4, au niveau d'une vanne 9, qui est en l'espèce une vanne trois voies 9, que l'on nommera par la suite vanne EGR 9 et qui forme le lieu ou zone de connexion du circuit de recirculation 2c au circuit d'admission 2a. Une telle recirculation des gaz d'échappement est dite basse pression, puisqu'elle est faite sur des gaz d'échappement en sortie du circuit d'échappement 2b (en aval de la turbine 10), qui sont à relativement basse pression. Un refroidisseur 12 de ces gaz d'échappement recirculés est également prévu dans le circuit de recirculation 2c. Les gaz qui ne sont pas recirculés forment les gaz d'échappement du véhicule, dont le flux est désigné par la flèche F3.

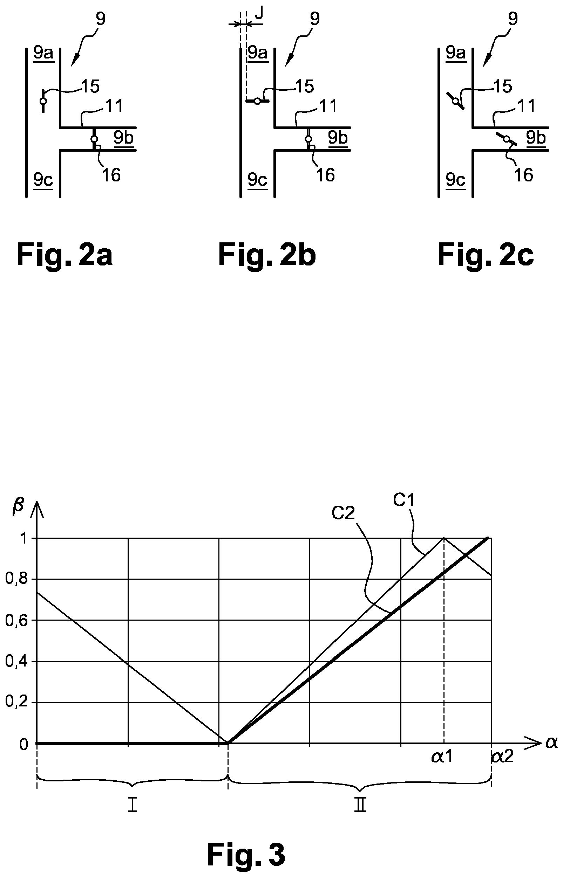

La vanne EGR 9 comporte une voie 9a (ou conduit 9a) d'entrée d'air d'alimentation, une voie 9b (ou conduit 9b) d'entrée de gaz EGR et une voie 9c (ou conduit 9c) de sortie de gaz qui forment les gaz d'admission (et dont la composition varie en fonction du débit des gaz issus des voies 9a, 9b d'entrée d'air et de gaz EGR). La vanne EGR 9 comporte un volet 15 dans sa voie d'entrée d'air 9a (ci-après dénommé "volet d'air 15") et un volet 16 dans sa voie d'entrée de gaz EGR 9b (ci-après dénommé "volet de gaz EGR 16"). Fonctionnellement, et comme on le voit particulièrement bien sur les figures 2a à 2c, la vanne EGR 9 remplit donc la fonction de deux vannes, l'une régulant le débit d'air frais et l'autre le débit de gaz EGR.

On présente ci-dessous les trois modes de fonctionnement de la vanne EGR 9 dans leur généralité, la mise en oeuvre de ces modes de fonctionnement et en particulier le rapport des degrés d'ouverture des volets 15, 16 pouvant varier en fonction des formes de réalisation de la vanne EGR 9.

Dans un premier mode de fonctionnement de la vanne EGR 9 représenté sur la figure 2a et correspondant à un fonctionnement du moteur M sans recirculation des gaz d'échappement (utile par exemple si le moteur fonctionne dans un environnement particulièrement froid), le volet d'air 15 est ouvert (totalement ou partiellement) et le volet de gaz EGR 16 est fermé, obstruant ainsi totalement la canalisation de recirculation 11. Le volet de gaz EGR 16 étant fermé, le volet d'air 15 peut prendre, dans ce premier mode de fonctionnement, tous les degrés d'ouverture entre son ouverture maximale et sa fermeture.

Dans un deuxième mode de fonctionnement de la vanne EGR 9 représenté sur la figure 2b et qui correspond à l'initiation d'un fonctionnement du moteur M avec recirculation des gaz d'échappement, les deux volets 15, 16 sont fermés ; un tel mode de fonctionnement peut typiquement être mis en oeuvre dans le régime de ralenti du moteur. Conformément à l'invention, le volet d'air 15 est conformé de manière à ce que son diamètre soit inférieur à celui de la canalisation dans laquelle il s'étend pour laisser un jeu "J" entre ses bords et la surface interne de la paroi de ladite canalisation. Ce jeu J autorise le passage d'un courant d'air frais de fuite qui garantit un débit d'air minimal dans le moteur M pour autoriser son fonctionnement dans ce mode de fonctionnement de la vanne EGR 9. Le faible débit de ce courant de fuite est en l'espèce compensé par l'ouverture du papillon 17 de réglage du régime moteur pour garantir un débit minimum suffisant au fonctionnement du moteur M.

Dans un troisième mode de fonctionnement de la vanne EGR 9 représenté sur la figure 2c et qui correspond à un fonctionnement du moteur M avec recirculation des gaz d'échappement, les deux volets 15, 16 ont été ouverts de manière concomitante depuis leur position de fermeture simultanée. Quel que soit le degré d'ouverture des deux volets 15, 16 dans un mode d'EGR particulier (leur taux d'ouverture respectifs pouvant être différents), le fonctionnement avec recirculation des gaz d'échappement est nécessairement initié par la fermeture simultanée des deux volets 15, 16 (figure 2b) suivie de leur ouverture simultanée. Puisque les deux volets 15, 16 sont ouverts concomitamment à partir d'une position de fermeture simultanée, la différence de pression aux bornes du volet EGR 16 (c'est-à-dire la différence entre la pression en amont du volet 16 et la pression en aval du volet 16) reste suffisamment importante, quelle que soit le degré d'ouverture des deux volets 15, 16, pour permettre sa mesure de manière efficace en utilisant un capteur de pression qui ne soit pas trop précis ; typiquement, la différence de pression reste ainsi comprise entre 15 millibars et 200 millibars ; on mesure cette différence de pression à l'aide d'un capteur de pression amont et d'un capteur de pression aval, non représentés.

Grâce à l'invention et à la mise en oeuvre de l'EGR par ouverture simultanée de la vanne d'air 15 et de la vanne de gaz EGR 16 à partir de leur fermeture simultanée, on garantit à faible charge (c'est-à-dire à faible régime) une dépression suffisante aux bornes des volets pour autoriser la mesure de la différence de pression à leurs bornes et donc le pilotage des volets (en général, on mesure uniquement la différence de pression aux bornes du volet de gaz EGR 16. En effet, l'ouverture du volet de gaz EGR 16 entraîne en soi une réduction de la différence de pression à ses bornes qui est compensée par l'ouverture concomitante du volet d'air 15 qui augmente le débit et augmente donc la différence de pression. A plus forte charge, le volet d'air 15 étant pleinement ou en grande partie ouvert, on garantit un débit suffisant d'air frais pour entretenir la forte charge.

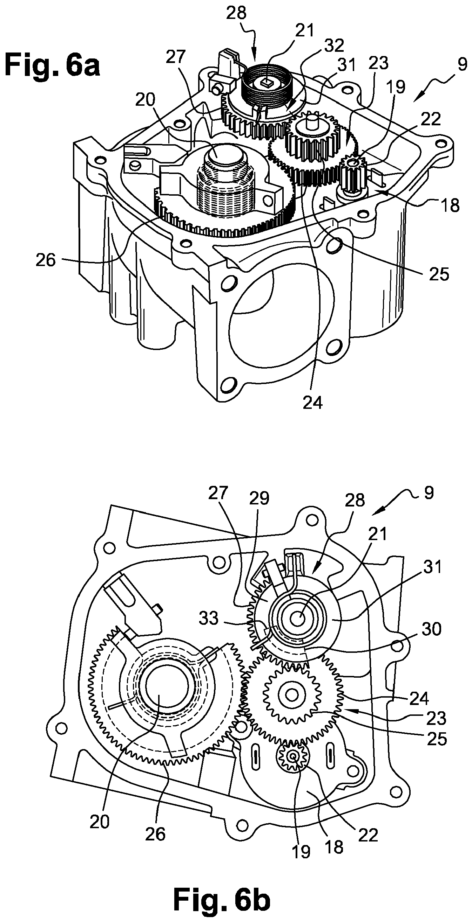

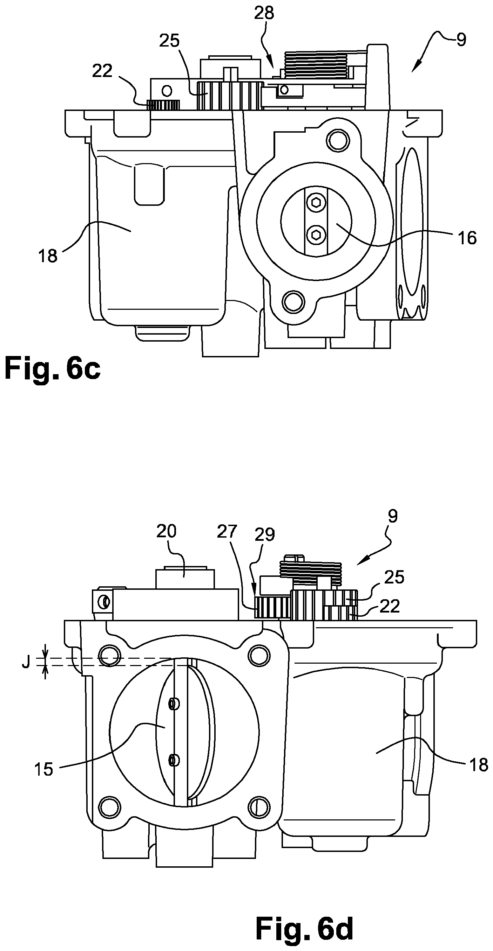

Dans la forme de réalisation préférée de l'invention présentée en référence aux figures 3, 6a, 6b, 6c et 6d, la vanne EGR 9 comporte un moteur unique 18 d'actionnement de ses deux volets 15, 16 ; il s'agit en l'espèce un moteur à courant continu. La vanne EGR 9 comporte un engrenage s'étendant depuis l'arbre 19 du moteur 18 jusqu'à deux arbres 20, 21 d'entraînement en rotation du volet d'air 15 et du volet de gaz EGR 16, respectivement. Ces arbres d'entraînement 20, 21 sont en l'espèce parallèles l'un à l'autre et à l'arbre 19 du moteur 18.

De l'arbre 19 du moteur 18 est solidaire un pignon 22 d'entraînement d'une roue dentée intermédiaire 23 portant une denture périphérique 24 et une denture centrale 25 (ces dentures 24, 25 sont superposées et concentriques). La denture périphérique 24 de la roue intermédiaire 23 engrène avec une couronne dentée 26 d'entraînement en rotation du volet d'air 15. La denture centrale 25 de la roue intermédiaire 23 engrène avec une couronne dentée 27 d'un mécanisme 28 d'entraînement en rotation du volet de gaz EGR 16.

Dans l'exemple considéré, le moteur 18, par son pignon 22, s'il est entraîné en rotation dans le sens contraire des aiguilles d'une montre, entraîne la roue intermédiaire 23 en rotation dans le sens des aiguilles d'une montre. A son tour, la roue intermédiaire 23 entraîne par ses dentures 24, 25 les couronnes 26, 27 d'entraînement en rotation des deux volets 15, 16, dans le sens contraire des aiguilles d'une montre.

Le volet d'air 15 est continûment entraîné en rotation par la rotation de sa denture d'entraînement 26, sans débrayage quelle que soit sa position. Dans la position de la denture 26 de la figure 6b, le volet d'air 15 est ouvert dans le premier mode de fonctionnement de la vanne EGR 9 c'est-à-dire avec le volet de gaz EGR 16 fermé (figure 2b). Lors de la rotation de sa denture d'entraînement 26 dans le sens inverse des aiguilles d'une montre, le volet d'air 15 passe de sa position ouverte à sa position fermée (rotation de 90°), c'est-à-dire dans sa position du deuxième mode de fonctionnement de la vanne EGR 9 (figure 2b) ; si la rotation du moteur 18 est poursuivie, la rotation du volet d'air 15 est poursuivie ce qui se traduit par son ouverture mais de l'autre côté, jusqu'à un angle de 90°, dans le troisième mode de fonctionnement de la vanne EGR 9 (figure 2c).

Le mécanisme 28 d'entraînement du volet de gaz EGR 16 comporte un système à débrayage agencé pour que la rotation de la couronne 27 n'entraîne pas en rotation l'arbre 21 d'entraînement du volet 16 sur la première moitié de sa course (0-90°) et l'entraîne en rotation sur la deuxième moitié de sa course (90°-180°). A cet effet, en l'espèce, le mécanisme 28 comporte une roue 29 portant la couronne 27 et dans laquelle est ménagée une lumière circulaire 30 de débrayage. Le mécanisme 28 comporte par ailleurs un disque 31 solidaire en rotation de l'arbre 21 d'entraînement du volet 16 et portant un doigt 32 agencé pour coulisser dans la lumière 31 entre 0° et 90° et venir en butée sur le fond 33 de la lumière entre 90° et 180° pour l'entraînement du disque 31 (et donc du volet 16) par la roue 29 portant la couronne 27.

Ainsi, partant de la position de la figure 6b (0°), la roue 29 est entraînée en rotation dans le sens inverse des aiguilles d'une montre et, jusqu'à ce qu'elle ait tourné de 90°, cette rotation n'entraîne aucun mouvement du volet 16 puisque la lumière 30 de la roue 29 coulisse autour du doigt 32 du disque 31. A partir de 90° et si la rotation est poursuivie, le fond 33 de la lumière 30 vient en butée sur le doigt 32 et entraîne ce dernier en rotation avec la roue 29, entraînant ainsi le disque 31 et donc le volet 16 en rotation depuis sa position de fermeture vers sa position d'ouverture. La rotation dans le sens inverse entraîne le déplacement inverse du volet 16, c'est-à-dire sa rotation depuis sa position d'ouverture vers sa position de fermeture depuis 180° jusqu'à 90° puis aucun mouvement depuis 90° jusqu'à 0°.

La loi cinématique d'entraînement des volets 15, 16 par le moteur 18 est représentée par le graphique de la figure 3 qui représente l'angle β d'ouverture des volets 15, 16 (courbe C1 pour le volet d'air 15 et courbe C2 pour le volet de gaz EGR 16) en fonction de l'angle α de rotation de l'arbre 19 du moteur 18.

Comme on le voit sur la figure 3, dans une première zone I, seul le volet d'air 15 est entraîné en rotation, depuis une position d'ouverture vers sa position de fermeture complète (le jeu J permettant dans cette position le passage d'un courant d'air de fuite à sa périphérie) ; le volet 15 est entraîné depuis sa position de fermeture vers une position d'ouverture en cas de rotation dans le sens contraire. Dans une deuxième zone II, les deux volets 15, 16 sont entraînés en rotation concomitamment depuis leur position de fermeture vers leur position d'ouverture (ou inversement en cas de rotation dans le sens contraire).

On note que l'ouverture concomitante des volets 15, 16 se fait, dans la forme de réalisation décrite, de manière linéaire en fonction de l'angle α de rotation de l'arbre 19 du moteur 18, les degrés d'ouverture des volets 15, 16 étant sensiblement identiques puisque les pentes des courbes C1, C2 sont proches (mais en l'espèce pas tout à fait identiques).

On note par ailleurs, en l'espèce, un décalage dans l'ouverture du volet d'air 15, ce dernier étant agencé pour atteindre sa position d'ouverture maximale à un angle α1 de position de l'arbre 19 du moteur 18 inférieur à l'angle α2 correspondant à l'ouverture maximale du volet de gaz EGR 16, le volet d'air 15 continuant sa rotation entre ces deux angles α1 et α2 et passant donc depuis sa position d'ouverture maximale à une position d'obturation partielle dans la position d'ouverture maximale du volet de gaz EGR 16. La combinaison de l'ouverture maximale du volet de gaz EGR 16 avec une fermeture partielle du volet d'air 15 permet d'accroître le taux d'EGR puisque la fermeture partielle du volet d'air 15 entraîne un effet d'aspiration des gaz EGR.

Bien entendu, l'engrenage d'entraînement en rotation des volets 15, 16 peut être agencé différemment pour une cinématique particulière d'ouverture des volets 15, 16, selon ce qui est souhaité par l'homme du métier.

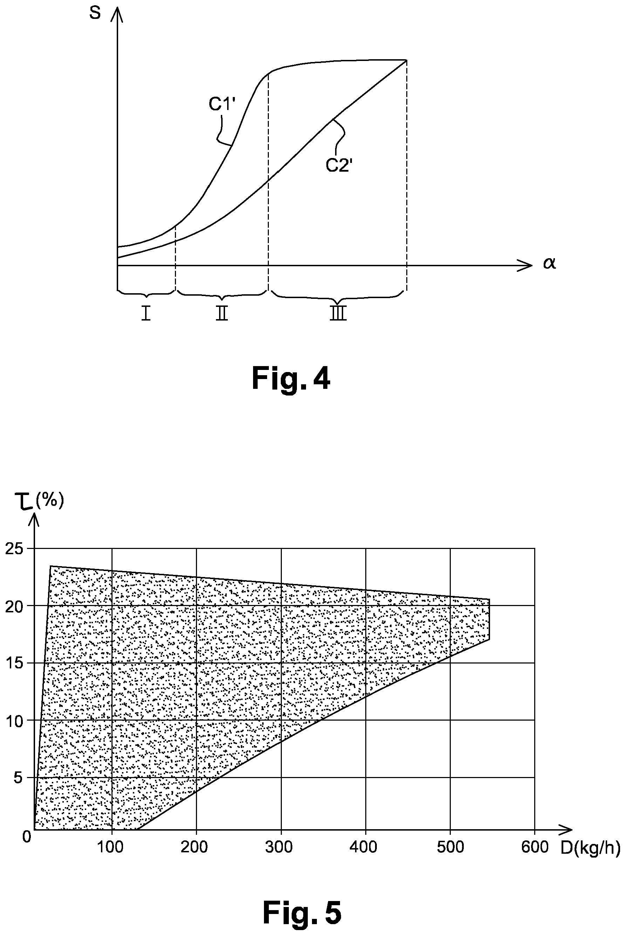

On donne un exemple d'une autre cinématique possible des volets 15, 16 d'une deuxième forme de réalisation de la vanne EGR 9, en référence à la figure 4 qui est un graphique représentant en ordonnée la section S de passage pour les gaz au niveau des volets 15, 16 (courbe C1' pour la section de passage pour l'air au niveau du volet d'air 15 et courbe C2' pour la section de passage pour les gaz EGR 16 au niveau du volet de gaz EGR 16), en fonction de l'angle α de rotation de l'arbre 19 du moteur 18. On note que les courbes ne sont pas des portions de droite comme dans la figure 3 car la section de passage n'est pas linéairement dépendante de l'angle α de l'arbre 19 du moteur 18 (contrairement à l'angle de rotation des volets 15, 16 qui en dépend linéairement, directement en fonction du rapport d'engrenage).

On note principalement trois phases ou modes de fonctionnement pour l'ouverture concomitante des volets 15, 16 de cette vanne EGR 9 :
- une première phase I dans laquelle la rotation du moteur 18 entraîne l'ouverture ou la fermeture des volets 15, 16 à des degrés d'ouverture sensiblement identiques ;
- une deuxième phase II dans laquelle la rotation du moteur 18 entraîne l'ouverture ou la fermeture des volets 15, 16 avec un degré d'ouverture du premier volet 15 supérieur au degré d'ouverture du second volet 16 et
- une troisième phase III dans laquelle la rotation du moteur 18 entraîne l'ouverture ou la fermeture du second volet 16, le premier volet 15 étant immobile et ouvert au maximum.

Les deux premières phases ou zone I, II sont utilisées pour les faibles ou moyennes charges du moteur M, pour assurer un taux d'EGR adapté avec une différence de pression aux bornes du volet de gaz EGR 16 permettant sa mesure de manière efficace. La troisième phase ou zone III est utilisée pour les fortes charges du moteur M, pour garantir un débit d'air maximum. L'homme du métier adaptera l'engrenage de la vanne EGR 9 pour obtenir une telle cinématique ; en particulier, cette cinématique d'ouverture des volets 15, 16, plus complexe à obtenir que celle de la première forme de réalisation de la vanne 9, pourra avantageusement être obtenue à l'aide de deux vannes 15, 16 commandées électroniquement.

On présente enfin à titre d'information sur la figure 5 un graphique représentant le taux d'EGR τ (en %, représentant le rapport du débit de gaz EGR sur le débit de gaz total D à l'admission du moteur M) en fonction de ce même débit de gaz D. Sur cette figure est représentée en grisé la zone correspondant aux taux d'EGR τ admissibles en fonction du débit D c'est-à-dire en fonction des différents régimes du moteur M. La cinématique de la vanne EGR 9 permet, pour chaque régime moteur M, de régler le taux d'EGR τ sur un point de cette zone.

Le fonctionnement de la vanne EGR 9 (quelle que soit sa forme de réalisation) est par ailleurs classique, de même que celui du moteur M et de ses circuits d'admission 2a, d'échappement 2b et de recirculation 2c. L'ensemble est régulé par l'ECU grâce notamment à la mesure de la différence de pression aux bornes du volet EGR 16 rendue possible et facilitée par le procédé de commande et la vanne 9 de l'invention.

L'invention a été présentée en relation avec une vanne munie de volets mais elle pourrait bien sûr être munie d'autres moyens d'obturation comme des papillons. Par ailleurs, comme déjà envisagé plus haut, la vanne trois voies pourrait être remplacée par deux vannes simples.

L'invention a été décrite en relation avec des formes de réalisations préférées, mais il va de soi que d'autres formes de réalisations sont envisageables. En particulier, les caractéristiques des différentes formes de réalisations décrites peuvent être combinées entre elles, s'il n'y a pas d'incompatibilités.

## Revendications

1. Procédé de commande d'un circuit (2c) de recirculation des gaz d'échappement d'un moteur (M) à combustion interne de véhicule automobile, le moteur (M) étant relié à un circuit d'admission d'air (2a) et à un circuit d'échappement de gaz (2b) relié au circuit d'admission d'air (2a) par le circuit de recirculation (2c), une première vanne (15) régulant le débit d'air en amont du circuit de recirculation (2c) et une seconde vanne (16) régulant le débit de gaz d'échappement recirculés dans le circuit de recirculation (2c), le circuit d'admission (2a) comportant, en aval du circuit de recirculation (2c), une troisième vanne (17) de régulation du débit des gaz admis dans le moteur (M), la recirculation des gaz d'échappement étant commandée notamment par mesure d'une différence de pression aux bornes de la seconde vanne (16), procédé **caractérisé par le fait qu'**il comporte les étapes suivantes :
a) on ferme la première et la seconde vanne (15, 16), la première vanne (15) étant agencée pour autoriser en position fermée le passage d'un courant de fuite d'air,
b) on ouvre concomitamment la première et la seconde vanne (15, 16) de manière à ménager une différence de pression suffisante aux bornes de la seconde vanne (16) pour permettre la mesure de la différence de pression à ses bornes,
et en ce que on agit sur ladite troisième vanne (17) pour compenser la fermeture de la première vanne (15).

2. Procédé selon la revendication 1 dans lequel les première et seconde vannes (15, 16) sont agencées dans une vanne trois voies (9) comportant une voie d'entrée (9a) avec la première vanne (15), une voie d'entrée (9b) avec la seconde vanne (16) et une voie de sortie (9c) communiquant directement ou indirectement avec un collecteur (6) d'admission de gaz dans le moteur (M).

3. Procédé selon l'une des revendications 1 à 2 dans lequel le degré d'ouverture de la première vanne (15) est sensiblement identique au degré d'ouverture de la seconde vanne (16) quel que soit leur degré d'ouverture.

4. Procédé selon l'une des revendications 1 à 2 comportant trois phases de fonctionnement pour l'ouverture concomitante des vannes (15, 16) :
- une première phase (I) dans laquelle le degré d'ouverture de la première vanne (15) est sensiblement identique au degré d'ouverture de la seconde vanne (16) ;
- une deuxième phase (II) dans laquelle le degré d'ouverture de la première vanne (15) est supérieur au degré d'ouverture de la seconde vanne (16) et
- une troisième phase (III) dans laquelle le degré d'ouverture de la première vanne (15) est constant et maximal pour une pluralité de degrés possibles d'ouverture de la seconde vanne (16).

5. Circuit d'admission d'air (2a) pour la mise en oeuvre du procédé de commande selon l'une des revendications 1 à 4, comportant :
- Une vanne trois voies destinée à assurer la liaison entre le circuit d'admission de gaz (2a) et le circuit de recirculation de gaz d'échappement (2c), la vanne comportant un premier volet (15) de régulation du débit d'air, un second volet (16) de régulation du débit de gaz d'échappement recirculés et un moteur unique (18) d'entraînement des deux volets (15, 16), vanne **caractérisée par le fait qu'**elle comporte un engrenage reliant le moteur (18) aux volets (15, 16) pour leur entraînement, l'engrenage comportant des moyens (19, 22, 23, 24, 26) d'entraînement du premier volet (15), des moyens (19, 22, 23, 24, 27) d'entraînement du second volet (16) et des moyens (30) de débrayage du second volet, la vanne présentant trois modes de fonctionnement :
- un premier mode de fonctionnement dans lequel le moteur (18) entraîne l'ouverture ou la fermeture du premier volet (15), le second volet (16) étant immobile et fermé ;
- un deuxième mode de fonctionnement dans lequel les deux volets (15, 16) sont fermés et
- un troisième mode de fonctionnement dans lequel le moteur (18) entraîne l'ouverture ou la fermeture concomitante des deux volets (15, 16),
- Une vanne (17) de régulation du débit des gaz admis dans le moteur (M), agencée en aval du circuit de recirculation pour compenser la fermeture du premier volet (15).

6. Circuit d'admission d'air (2a) selon la revendication 5 dans lequel l'ouverture ou la fermeture concomitante des deux volets (15, 16) de la vanne trois voies présente trois phases :
- une première phase (I) dans laquelle la rotation du moteur (18) entraîne l'ouverture ou la fermeture des volets (15, 16) à des degrés d'ouverture sensiblement identiques ;
- une deuxième phase dans laquelle la rotation du moteur (18) entraîne l'ouverture ou la fermeture des volets (15, 16) avec un degré d'ouverture du premier volet (15) supérieur au degré d'ouverture du second volet (16) et
- une troisième phase dans laquelle la rotation du moteur (18) entraîne l'ouverture ou la fermeture du second volet (16), le premier volet (15) étant immobile et ouvert au maximum.

7. Moteur thermique à combustion interne de véhicule automobile comportant un circuit d'admission d'air (2a) selon l'une des revendications 5 à 6.

## Patentansprüche

1. Verfahren zum Steuern einer Abgasrückführungsleitung (2c) einer Kraftfahrzeug-Brennkraftmaschine (M), wobei die Maschine (M) mit einer Lufteinlassleitung (2a) und mit einer Abgasleitung (2b), die mit der Lufteinlassleitung (2a) durch die Rückführungsleitung (2c) verbunden ist, verbunden ist, wobei ein erstes Ventil (15) den Luftdurchfluss stromaufseitig der Rückführungsleitung (2c) und ein zweites Ventil (16) den Durchfluss rückgeführter Abgase in der Rückführungsleitung (2c) reguliert, wobei die Einlassleitung (2a) stromabseitig der Rückführungsleitung (2c) ein drittes Ventil (17) zum Regulieren des Durchflusses der in den Motor (M) eingelassenen Gase umfasst, wobei die Rückführung der Abgase insbesondere durch Messen eines Druckunterschieds an den Anschlüssen des zweiten Ventils (16) gesteuert wird wobei das Verfahren **dadurch gekennzeichnet ist, dass** es die folgenden Schritte umfasst:
a) Schließen des ersten und des zweiten Ventils (15, 16), wobei das erste Ventil (15) dafür ausgelegt ist, in der geschlossenen Stellung den Durchgang eines Luftleckstroms zuzulassen,
b) gleichzeitiges Öffnen des ersten und des zweiten Ventils (15, 16) in der Weise, dass an den Anschlüssen des zweiten Ventils (16) eine ausreichende Druckdifferenz erzeugt wird, um die Messung der Druckdifferenz an seinen Anschlüssen zu ermöglichen,
und dass auf das dritte Ventil (17) eingewirkt wird, um das Schließen des ersten Ventils (15) auszugleichen.

2. Verfahren nach Anspruch 1, wobei das erste und das zweite Ventil (15, 16) in einem Dreiwegeventil (9) angeordnet sind, das einen Eingangsweg (9a) mit dem ersten Ventil (15), einen Eingangsweg (9b) mit dem zweiten Ventil (16) und einen Ausgangsweg (9c), der direkt oder indirekt mit einem Gaseinlasssammler (6) in der Maschine (M) kommuniziert, umfasst.

3. Verfahren nach einem der Ansprüche 1 bis 2, wobei der Öffnungsgrad des ersten Ventils (15) mit dem Öffnungsgrad des zweiten Ventils (16) unabhängig vom jeweiligen Öffnungsgrad im Wesentlichen übereinstimmt.

4. Verfahren nach einem der Ansprüche 1 bis 2, das drei Funktionsphasen zum gleichzeitigen Öffnen der Ventile (15, 16) umfasst,
- eine erste Phase (I), in der der Öffnungsgrad des ersten Ventils (15) mit dem Öffnungsgrad des zweiten Ventils (16) im Wesentlichen übereinstimmt;
- eine zweite Phase (II), in der der Öffnungsgrad des ersten Ventils (15) größer als der Öffnungsgrad des zweiten Ventils (16) ist; und
- eine dritte Phase (III), in der der Öffnungsgrad des ersten Ventils (15) für mehrere mögliche Öffnungsgrade des zweiten Ventils (16) konstant und maximal ist.

5. Lufteinlassleitung (2a) zum Ausführen des Steuerverfahrens nach einem der Ansprüche 1 bis 4, die Folgendes umfasst:
- ein Dreiwegeventil, das dazu bestimmt ist, die Verbindung zwischen der Gaseinlassleitung (2a) und der Abgasrückführungsleitung (2c) sicherzustellen, wobei das Ventil eine erste Klappe (15) zum Regulieren des Luftdurchflusses, eine zweite Klappe (16) zum Regulieren des Durchflusses rückgeführter Abgase und einen einzigen Motor (18) zum Antreiben der beiden Klappen (15, 16) aufweist, wobei das Ventil **dadurch gekennzeichnet ist, dass** es ein Getriebe umfasst, das den Motor (18) mit den Klappen (15, 16) verbindet, um sie anzutreiben, wobei das Getriebe Mittel (19, 22, 23, 24, 26) für den Antrieb der ersten Klappe (15) und Mittel (19, 22, 23, 24, 27) für den Antrieb der zweiten Klappe (16) und Mittel (30) zum Abkoppeln der zweiten Klappe umfasst, wobei das Ventil drei Funktionsweisen aufweist:
- eine erste Funktionsweise, in der der Motor (18) das Öffnen oder Schließen der ersten Klappe (15) antreibt, wobei die zweite Klappe (16) unbeweglich und geschlossen bleibt;
- eine zweite Funktionsweise, in der die zwei Klappen (15, 16) geschlossen sind; und
- eine dritte Funktionsweise, in der der Motor (18) das gleichzeitige Öffnen oder Schließen der zwei Klappen (15, 16) antreibt,
- ein Ventil (17) zum Regulieren des Durchflusses der Gase, die in die Maschine (M) eingelassen werden, das stromabseitig der Rückführungsleitung angeordnet ist, um das Schließen der ersten Klappe (15) auszugleichen.

6. Lufteinlassleitung (2a) nach Anspruch 5, wobei das gleichzeitige Öffnen oder Schließen der beiden Klappen (15, 16) des Dreiwegeventils drei Phasen umfasst,
- eine erste Phase (I), in der die Drehung des Motors (18) das Öffnen oder Schließen der Klappen (15, 16) mit im Wesentlichen übereinstimmenden Öffnungsgraden antreibt;
- eine zweite Phase, in der die Drehung des Motors (18) das Öffnen oder Schließen der Klappen (15, 16) in der Weise antreibt, dass der Öffnungsgrad der ersten Klappe (15) größer als der Öffnungsgrad der zweiten Klappe (16) ist; und
- eine dritte Phase, in der die Drehung des Motors (18) das Öffnen oder Schließen der zweiten Klappe (16) in der Weise antreibt, dass die erste Klappe (15) unbeweglich und maximal geöffnet ist.

7. Kraftfahrzeug-Brennkraftmaschine, die eine Lufteinlassleitung (2a) nach einem der Ansprüche 5 bis 6 umfasst.

## Claims

1. Method of controlling an exhaust gas recirculation circuit (2c) of a motor vehicle internal combustion engine (M), the engine (M) being connected to an air intake circuit (2a) and to an exhaust gas circuit (2b) connected to the air intake circuit (2a) by the recirculation circuit (2c), a first valve (15) regulating the airflow rate upstream of the recirculation circuit (2c) and a second valve (16) regulating the flow rate of recirculated exhaust gases in the recirculation circuit (2c), the intake circuit (2a) comprising, downstream of the recirculation circuit (2c), a third valve (17) for regulating the flow rate of the gases admitted to the engine (M), the exhaust gas recirculation being controlled notably by measuring a pressure difference across the second valve (16), the method being **characterized in that** it comprises the following steps:
a) the first and second valves (15, 16) are closed, the first valve (15) being arranged to allow, when in the closed position, an air leak current to pass,
b) the first and second valves (15, 16) are opened concomitantly so as to create enough of a pressure difference across the second valve (16) that this pressure difference can be measured, and **in that** said third valve (17) is operated in such a way as to compensate for the closure of the first valve (15).

2. Method according to Claim 1, in which the first and second valves (15, 16) are arranged in a three-way valve (9) comprising an inlet port (9a) with the first valve (15), an inlet port (9b) with the second valve (16) and an outlet port (9c) communicating directly or indirectly with an intake manifold (6) that admits gas to the engine (M).

3. Method according to either of Claims 1 and 2, in which the degree of opening of the first valve (15) is substantially identical to the degree of opening of the second valve (16), whatever their degree of opening.

4. Method according to either of Claims 1 and 2, comprising three phases of operation for the concomitant opening of the valves (15, 16):
- a first phase (I) in which the degree of opening of the first valve (15) is substantially identical to the degree of opening of the second valve (16);
- a second phase (II) in which the degree of opening of the first valve (15) is greater than the degree of opening of the second valve (16), and
- a third phase (III) in which the degree of opening of the first valve (15) is constant and maximum for a plurality of possible degrees of opening of the second valve (16).

5. Air intake circuit (2a) for implementing the control method according to one of Claims 1 to 4, comprising:
- a three-way valve intended to provide the connection between the gas intake circuit (2a) and the exhaust gas recirculation circuit (2c), the valve comprising a first shutter (15) for regulating the airflow rate, a second shutter (16) for regulating the recirculated exhaust gas flow rate, and a single motor (18) for driving the two shutters (15, 16), the valve being **characterized in that** it comprises gearing connecting the motor (18) to the shutters (15, 16) in order to drive them, the gearing comprising means (19, 22, 23, 24, 26) of driving the first shutter (15), means (19, 22, 23, 24, 27) of driving the second shutter (16) and means (30) of disengaging the second shutter, the valve having three modes of operation:
- a first mode of operation in which the motor (18) drives the opening or closing of the first shutter (15), the second shutter (16) being immobile and closed;
- a second mode of operation in which both shutters (15, 16) are closed, and
- a third mode of operation in which the motor (18) drives the concomitant opening or closing of the two shutters (15, 16),
- a valve (17) for regulating the flow rate of the gases admitted to the engine (M), which valve is arranged downstream of the recirculation circuit, so as to compensate for the closure of the first shutter (15).

6. Air intake circuit (2a) according to Claim 5, in which the concomitant opening or closing of the two shutters (15, 16) of the three-way valve has three phases:
- a first phase (I) in which the rotation of the motor (18) drives the opening or closing of the shutters (15, 16) to substantially identical degrees of opening;
- a second phase in which the rotation of the motor (18) drives the opening or closing of the shutters (15, 16) with the first shutter (15) having a degree of opening greater than the degree of opening of the second shutter (16), and
- a third phase in which the rotation of the motor (18) drives the opening or closing of the second shutter (16), the first shutter (15) being immobile and wide open.

7. Motor vehicle internal combustion engine comprising an air intake circuit (2a) according to either of Claims 5 and 6.
